# EUROPÄISCHE PATENTSCHRIFT

(11) **EP 0 747 585 B1**
(45) Veröffentlichungstag und Bekanntmachung des Hinweises auf die Patenterteilung: **17.07.2002**
(21) Anmeldenummer: 96107009.1
(22) Anmeldetag: 03.05.1996
(51) Int. Cl.: F02B 37/18, F02D 33/02, F02D 43/00

(54) **Steuerung für den Ladedruck eines Turboladers an einer Brennkraftmaschine**
Control of the supercharging pressure of a turbocharger for an internal combustion engine
Commande de la pression de suralimentation d'un turbocompresseur de moteur à combustion

(30) Priorität: 07.06.1995 DE 19520665
(43) Veröffentlichungstag der Anmeldung: 11.12.1996
(73) Patentinhaber: Volkswagen Aktiengesellschaft, 38436 Wolfsburg (DE)
(72) Erfinder: Schultalbers, Winfried, Dipl.-Ing., 38536 Meinersen (DE); Böstfleisch, Volker, 74172 Neckarsulm (DE)

(56) Entgegenhaltungen:
- EP-A- 0 323 256
- FR-A- 2 540 180
- US-A- 4 485 625
- US-A- 4 671 068
- PATENT ABSTRACTS OF JAPAN vol. 010, no. 134 (M-479), 17.Mai 1986 & JP 60 259724 A (MAZDA KK), 21.Dezember 1985,

## Beschreibung

Die Erfindung betrifft ein Verfahren zum Einstellen des Ladedruckes eines Turboladers einer Brennkraftmaschine mit zuschaltbarer Abgasrückführung, bei dem mit einem Stellglied ein dem Turbolader zugeordnetes Bypass-Ventil und/oder eine variable Geometrie in der Turbine des Turboladers betätigt wird, wobei die Ansteuerung des Stellgliedes in Abhängigkeit von zumindest der Drehzahl N der Brennkraftmaschine mit einer Steuereinrichtung angesteuert wird sowie in einem ersten Lastbereich LB1 der Ladedruck durch Auslesen von Sollwerten SW aus mindestens einem Soll-Kennfeld der Steuereinrichtung gesteuert und in einem zweiten Lastbereich LB2 der Ladedruck durch einen Regler der Steuereinrichtung geregelt wird, wobei in dem zweiten Lastbereich LB2 der Ladedruck durch den Regler der Steuereinrichtung unter Berücksichtigung einer Vorsteuerung durch die aus dem Soll-Kennfeld ausgelesen Soll-Werte SW geregelt wird, gemäß dem Oberbegriff des Patentanspruches 1.

Aus der DE-35 07 095 C2 ist eine gattungsgemäße Steuerung für einen Turbolader mit variabler Turbinengeometrie (VTG-Lader) bekannt, bei welcher von zumindest einem Stellglied die variable Turbinengeometrie betätigt wird und von einem weiteren Stellglied ein zur Umgehung der Abgasturbine ausgebildetes Bypassventil. Zur Ansteuerung der Stellglieder ist eine Steuereinrichtung vorgesehen, welche in Abhängigkeit eines Drosselklappenwinkels, einer Brennkraftmaschinendrehzahl, einer Ansaugluftmenge und in Abhängigkeit von Signalen eines Klopfsensors arbeitet.

In EP-04 33 560 A1 ist ein Abgasturbolader offenbart, dessen variable Turbinengeometrie und dessen Bypassventil von einem gemeinsamen Stellglied betätigt wird.

Die vorgenannten Stellglieder werden in der Praxis mit einem bestimmten Tastverhältnis angesteuert.

Desweiteren ist es allgemein bekannt, Brennkraftmaschinen mit einer geregelten Abgasrückführung auszustatten. Hierbei wird in Abhängigkeit von Betriebsbereichen eine Teilabgasmenge dem Abgasstrang entnommen und stromauf von Einlasskanälen dem Ansaugsystem zugeführt.

Die EP 0 323 256 A2 betrifft eine Regelung für einen Turbolader einer Brennkraftmaschine. Hierbei ist je nach Betriebszustand der Brennkraftmaschine eine Regelung oder eine Steuerung des Ladedruckes vorgesehen, wobei die Umschaltung in Abhängigkeit von einer Last der Brennkraftmaschine erfolgt. Als besonderer Nachteil bei herkömmlichen Regelungen wird erläutert, dass die Regelung einer erheblichen Zeitverzögerung mit entsprechendem Überschießen und Nachhinken unterliegt, was um so stärker ist, je größer die Differenz zwischen Sollwert und Istwert für den Ladedruck ist. Als Verbesserung wird vorgeschlagen, dass ein Reglerausgang in Abhängigkeit von einer Differenz zwischen einem Istwert und eines Sollwertes des Ladedruckes mit einem Korrekturwert versehen wird.

Der Erfindung liegt die Aufgabe zugrunde, eine Steuerung für den Ladedruck eines Turboladers an einer Brennkraftmaschine zu schaffen, welche in verbesserter Weise in weiten Betriebsbereichen dieser Brennkraftmaschine eine verbesserte Leistung, ein erhöhtes Drehmoment und einen geringeren Kraftstoffverbrauch, insbesondere in Teillastbereichen ermöglicht.

Die Lösung dieser Aufgabe gelingt mit den Merkmalen des Patentanspruches 1.
Vorteilhafte Ausgestaltungen der Erfindung sind in den abhängigen Ansprüchen benannt.

Erfindungsgemäß ist es bei einem Verfahren der o.g. vorgesehen, dass in dem ersten Lastbereich LB1 die Abgasrückführung geregelt zugeschaltet ist und in dem zweiten Lastbereich LB2 abgeschaltet ist.

Diese Regelung erlaubt unter Berücksichtigung verschiedener Parameter eine optimale Einstellung des Ladedruckes dahingehend, dass ein Ladedruckaufbau frühzeitig erfolgen kann und insgesamt auf einem erhöhten Niveau verläuft. Bei einem Turbolader mit fester Geometrie und Bypass wird durch das Stellglied das Bypassventil in entsprechender Weise gesteuert bzw. geregelt, während bei einem Turbolader mit variabler Turbinengeometrie das Stellglied zumindest auf die verstellbare Geometrie wirkt.

In vorteilhafter Ausgestaltung der Erfindung erfolgt die Umschaltung zwischen dem gesteuerten und dem geregelten Lastbereich in Abhängigkeit eines drehzahlabhängigen Wertes einer Kraftstoffeinspritzmenge. In dem ersten Lastbereich, welcher vorzugsweise ein Bereich mit vergleichsweise niedriger Last ist, werden Sollwerte für den Ladedruck in Abhängigkeit der Drehzahl und der Kraftstoffeinspritzmenge aus Soll-Kennfeldern ausgelesen. Diese Sollwerte werden in ein bestimmtes Tastverhältnis umgesetzt, mit welchem das Stellglied angesteuert wird.

In bevorzugter Weise werden diese Sollwerte aus verschiedenen Kennfeldern ausgelesen, wodurch beispielsweise die Fahrweise eines mit diesem Turbolader ausgestatteten Kraftfahrzeuges berücksichtigt werden kann. Eine solche Berücksichtigung der Fahrweise, beispielsweise sportlich oder ökonomisch, ist zum Beispiel von adaptiven Getriebesteuerungen bekannt. Desweiteren kann die Auswahl der Sollwerte unter Zuhilfenahme von den Atmosphärendruck und die Lufttemperatur berücksichtigenden Kennfeldem erfolgen.

Im zweiten Lastbereich mit geregeltem und gesteuertem Ladedruck wird bevorzugt ein als PID-Regler ausgebildeter Regler verwendet, welcher wiederum bevorzugt aus einem Pl-Regler und einem parallel dazu geschalteten D-Regler oder DT1-Regler aufgebaut ist. Aufgrund der dynamischen Betriebsweise einer solchen Brennkraftmaschine ist die schnelle Regelung durch einen P-Anteil vorteilhaft, während der I-Anteil eine unerwünschte, bleibende Regelabweichung vermeidet.

Dem PI-Regler und dem D- bzw. DT1-Regler werden eingangsseitig jeweils Soll- und Ist-Ladedruck zugeführt. Dem Ausgang des PI-Reglers wird das aus der Steuerung stammende Tastverhältnis als Vorsteuerung überlagert, anschließend der Anteil des D-Reglers berücksichtigt, woraus sich abschließend das dem Stellglied zugeführte Tastverhältnis ergibt.

Der dem PID-Regler zugeführte Ist-Ladedruck wird aus einem stromab des Verdichters des Turboladers erfassten und gefilterten Ladedruck gebildet, gegebenenfalls unter Berücksichtigung des Atmosphärendruckes.

Bei eingeschalteter Regelung findet eine ständige Überwachung der Regelabweichung des Reglers statt, was in besonders vorteilhafter Weise bei einem Turbolader mit variabler Turbinengeometrie angewendet werden kann. Da sich bei einem solchen Lader die Regelstrecke während des Betriebes ändert, kann eine gesteuerte Adaption der Reglerparameter in der Weise erfolgen, dass in Abhängigkeit zumindest der Brennkraftmaschinendrehzahl ein Faktor aus mindestens einer Kennlinie ausgelesen und mit einem für den jeweiligen Reglerparameter geltenden und von der Regelabweichung abhängigen Festwert zu einem adaptierten Reglerparameter multipliziert wird.

Alternativ zur Drehzahl können die genannten Faktoren auch in Abhängigkeit des Kraftstoffverbrauches oder anhand einer Gangerkennung ausgelesen werden.

Weitere Vorteile der Erfindung ergeben sich aus dem nachstehenden Ausführungsbeispiel, welches anhand einer Zeichnung näher erläutert wird.

Es zeigen:
- Figur 1: ein schematisches Blockschaltbild der Steuereinrichtung,
- Figur 2: ein Blockschaltbild für die Ladedruck-Sollwertbildung,
- Figur 3: ein Blockschaltbild für die Adaption von Reglerparametem,
- Figur 4: ein detaillierteres Blockschaltbild der Ladedruckregelung und
- Figur 5: ein Drehzahl/Kraftstoffmengen-Diagramm.

Eine Steuerung für den Ladedruck eines mit einer variablen Turbinengeometrie versehenen Turboladers weist eine Steuereinrichtung auf, welche sowohl einen Steuerblock wie auch einen Reglerblock umfaßt.

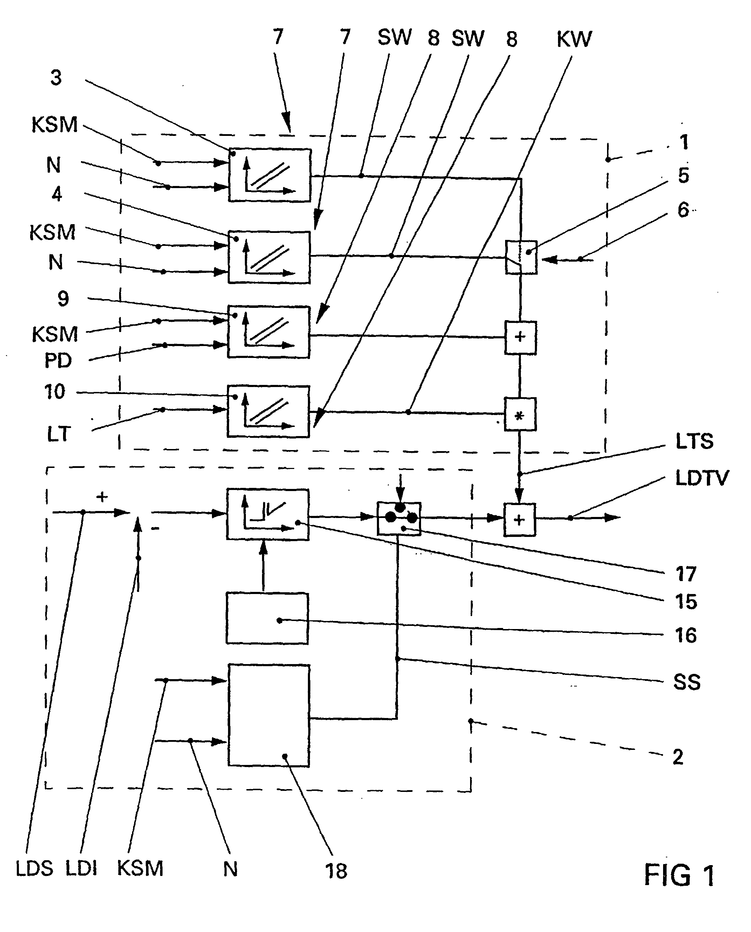

Figur 1 zeigt schematisch das Zusammenwirken eines Steuerblockes 1 sowie eines Reglerblockes 2 der Steuereinrichtung, wobei ausgangsseitig dieser Steuereinrichtung ein Tastverhältnis LDTV für die Ansteuerung des auf die variable Turbinengeometrie wirkenden Stellgliedes vorliegt.

Eine mit diesem Turbolader ausgestattete Brennkraftmaschine bzw. ein damit ausgestattetes Kraftfahrzeug, weist zur Verbesserung der Abgasemissionen eine geregelte Abgasrückführung auf.
Eine solche Abgasrückführung ist, wie auch einVTG-Lader an sich bekannt und wird daher nicht näher behandelt.

Die Brennkraftmaschine wird in einem ersten Lastbereich LB1, mit vergleichsweise niedriger Last und/oder Drehzahl, mit eingeschalteter geregelter Abgasrückführung betrieben. In diesem ersten Lastbereich LB1 wird der Ladedruck ausschließlich mit Hilfe des Steuerblockes 1 gesteuert. Hierfür liegt ausgangsseitig dieses Steuerblockes 1 ein Ladedrucktastverhältnis LTS an.
Zur Bildung von LTS werden aus mehreren Kennfeldem Sollwerte SW ausgelesen und zusammengeführt.

In Abhängigkeit der Fahrweise, mit welcher ein mit dem Turbolader ausgerüstetes Kraftfahrzeug bewegt wird, werden alternativ aus einem Sportkennfeld 3 oder einem Sparkennfeld 4 Soll-Werte ausgelesen und über einen Schalter 5 geführt, welcher in Abhängigkeit eines Fahrweisesignales 6 betätigt wird.
Eingangsseitig der Kennfelder 3 und 4 liegt jeweils ein Signal einer mittleren Brennkraftmaschinendrehzahl N und ein Kraftstoffeinspritzmengensignal KSM an.

Das Sport- und das Sparkennfeld 3 und 4 sind allgemein Soll-Kennfelder 7, aus welchen die Sollwerte SW ausgelesen werden.

Aus Korrekturkennfeldern 8 werden Korrekturwerte KW ausgelesen und den zuvor aus den Kennfeldern 3 bzw. 4 ausgelesenen Sollwerten SW additiv bzw. multiplikativ überlagert. Eingangsseitig eines Atmosphärendruck-Korrekturkennfeldes 9 liegt wiederum das Kraftstoffeinspritzmengensignal KSM an sowie ein Atmosphärendrucksignal PD. Der ausgelesene Korrekturwert KW wird dem Sollwert SW nach dem Schalter 5 additiv überlagert.

Eingangsseitig eines Umgebungslufttemperatur-Korrekturkennfeldes 10 steht ein Umgebungslufttemperatursignal LT an, in Abhängigkeit dessen Korrekturwerte KW ausgelesen werden und multiplikativ dem bereits mit Hilfe des Atmosphärendruckkennfeldes 9 korrigierten Soll-Wertes überlagert.

Das Kraftstoffeinspritzmengensignal KSM wird in nicht gezeigter Weise aus einem Fahrverhaltenkennfeid und einer für den Leerlaufbetrieb der Brennkraftmaschine notwendigen Kraftstoffmenge ermittelt, wobei das Fahrverhaltenkennfeld mit dem mittleren Brennkraftmaschinendrehzahlsignal N und einem Signal eines Pedalwertgebers beaufschlagt ist.

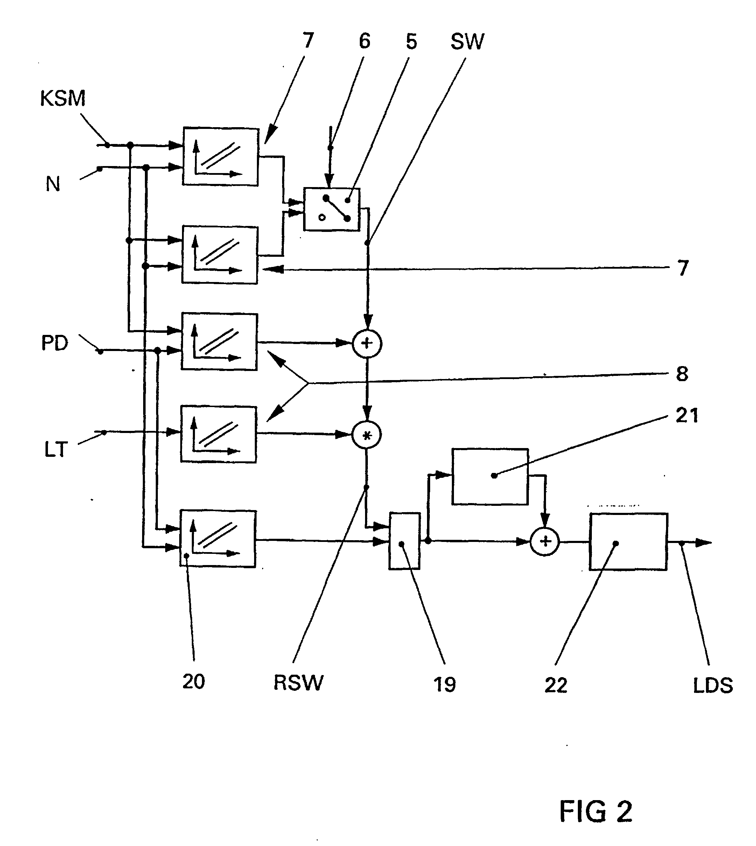

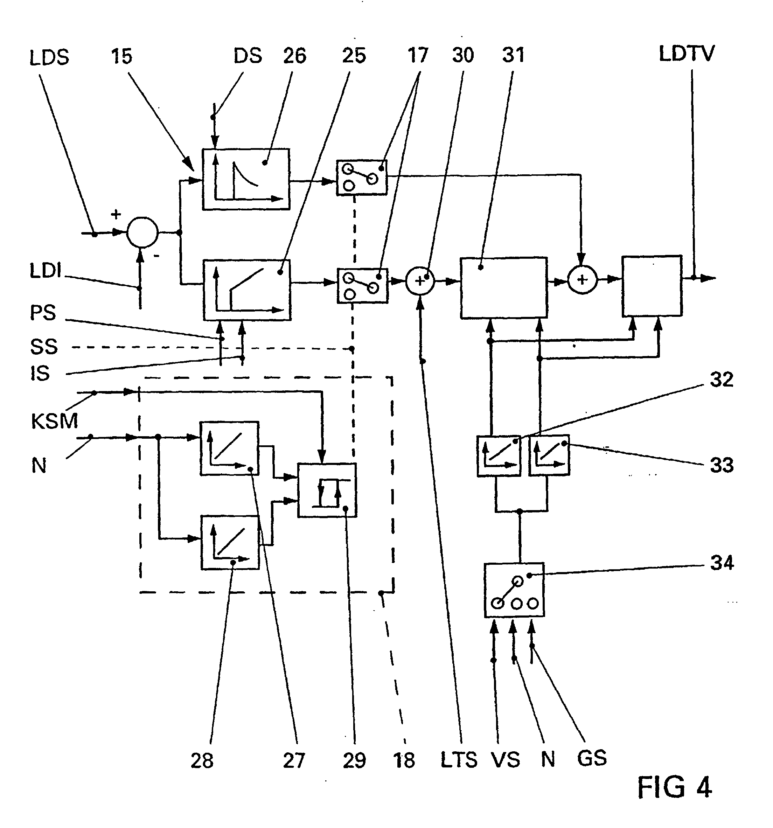

Der Regelblock 2 weist einen Regler 15 auf, welcher als PID-Regler ausgebildet ist und anhand von Figur 4 später erläutert wird. Eingangsseitig liegt ein aus einem Ladedruck-Soll-Wert LDS und einem Ladedruck-Ist-Wert LDI gebildetes Differenzsignal an. Die Bildung von LDS wird später anhand von Figur 2 näher erläutert.

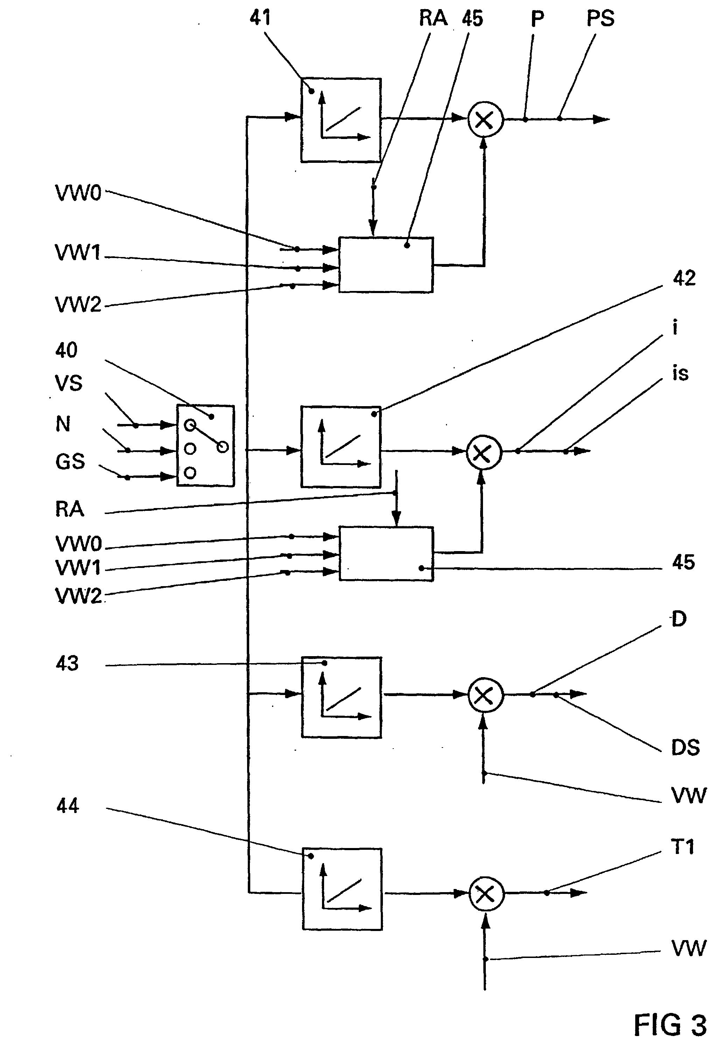

Zur Anpassung an die sich durch den Betrieb der variablen Turbinengeometrie ändernden Regelstrecke wird der Regler 15 mit Hilfe eines Adaptionsblockes 16 angepaßt betrieben. Dieser Block 16 wird später anhand von Figur 3 näher erläutert.

Zum Einschalten der Regelung beim Übergang vom ersten in den zweiten Lastbereich LB2 ist ein Schalter 17 vorgesehen, an welchem der Ausgang des Reglers 15 anliegt.

Der Schalter 17 wird von einem Schaltsignal SS betätigt, welches aus einem Funktionsblock 18 gewonnen wird, der im Zusammenhang mit Figur 4 näher erläutert wird.

Die Gewinnung des Ladedruck-Sollwertes LDS wird nachfolgend anhand von Figur 2 näher erläutert.
In mit der Gewinnung des Ladedrucktastverhältnisses LTS aus dem Steuerblock 1 vergleichbarer Weise wird unter Berücksichtigung des Fahrweisesignales 6 über den Schalter 5 aus Soll-Kennfeldem 7 ein Sollwert ausgelesen, welcher anschließend mit Hilfe von Korrekturkennfeldem 8 additiv bzw. multiplikativ behandelt wird.
Der so gewonnene Roh-Sollwert RSW wird anschließend in einem Begrenzer 19 auf einen Maximalwert limitiert. Dieser Maximalwert wird drehzahl- und atmosphärendruckabhängig aus einem Begrenzerkennfeld 20 ausgelesen.

Das somit limitierte Roh-Sollwertsignal wird anschließend verzweigt und dabei einem Differenzverstärker 21 zugeführt und anschließend dem anderen Zweig hinzuaddiert. Dieser Verstärker 21 enthält getrennte Parameter für Klein- bzw. Großsignale und stellt ausgangsseitig einen dynamischen Ladedruck-Sollwertanteil bereit.
Der Differenzverstärker 21 wird ausgeschaltet, wenn am Schalter 5 eine Umschaltung der Fahrweise erfolgt, damit der sich infolgedessen einstellende Sollwert-Sprung nicht verstärkt wird.

Abschließend wird der so gewonnene Sollwert einem Sollwert-Begrenzer 22 zugeführt, welcher den Ladedruck-Sollwert LDS auf ein voreingestelltes Maximum bzw. ein Minimum begrenzt.

Die Funktion des Regelblockes 2 wird nun anhand von Figur 4 näher erläutert.
Der PID-Regler 15 besteht aus einem PI-Regler 25 und einem parallel dazu geschalteten DT1-Regler 26, d. h. einem D-Regler mit variabler Filterzeitkonstante T1.
Bei mittels Schalter 17 eingeschalteter Regelung wird der am Ausgang des PI-Reglers 25 anliegenden Stellgröße das aus dem Steuerblock 1 gewonnene Signal LTS zwecks Vorsteuerung hinzuaddiert.
Parallel hierzu liegt der DT1-Regler 26, dessen Stellgröße anschließend hinzuaddiert wird.

Wie bereits zuvor beschrieben, erfolgt das Ein- bzw. Ausschalten des Reglers mittels des Schalters 17 in Abhängigkeit des Schaltsignales SS aus dem Funktionsblock 18. Eingangsseitig werden diesem das Kraftstoffeinspritzmengensignal KSM und das Drehzahlsignal N zugeführt, wobei die Einschaltung erst dann erfolgt, wenn KSM eine drehzahlabhängige Schwelle überschreitet, welche aus einer oberen Kennlinie 27 ausgelesen wird. Die Ausschaltung der Regelung erfolgt, wenn diese Menge eine drehzahlabhängige Schwelle erreicht oder unterschreitet, welche aus einer unteren Kennlinie 28 ausgelesen wird.
Die aus der Kennlinie 27 ausgelesenen Werte sind für alle Drehzahlen N größer als der Ausgangswert der Kennlinie 28. Um ein ständiges Ein- und Ausschalten zu vermeiden, sind beide Kennlinien 27, 28 mit einer Hysterese 29 appliziert.

Beim Einschalten der Regelung wird der integrierende I-Anteil des PI-Reglers 25 mit Null vorbelegt. Liegt beim Einschalten eine Regelabweichung vor, so erzeugt der proportional wirkende P-Anteil einen Sprung am Ausgang des Pl-Reglers 25.
Der DT1-Regler 26 ist so geschaltet, daß an seinem Ausgang unmittelbar nach dem Einschalten der Regelung Null anliegt.

Der hinter einer Additionsstelle 30 vorliegende Wert wird anschließend einem Begrenzer 31 zugeführt. In diesem Begrenzer 31 wird der Wert auf einen aus einer oberen Kennlinie 32 bzw. aus einer unteren Kennlinie 33 ausgelesenen Wert begrenzt. Die Auswahl der Werte aus diesen Kennlinien 32, 33 erfolgt in Abhängigkeit der Stellung eines Schalters 34, welcher entweder ein Kraftstoffverbrauchssignal VS, das Drehzahlsignal N oder ein Gangerkennungssignal GS durchschleift.
Nach der Behandlung im Begrenzer 31 wird der Ausgang des DT1-Reglers 26 addiert und dieser neu gewonnene Wert erneut der zuvor beschriebenen Begrenzung durch die Kennlinien 32 und 33 unterworfen.

Erfolgt am Schalter 5 eine Umschaltung infolge des Fahrweisesignales 6, so entsteht am Ladedruck-Sollwert LDS und am Ladedruck-Tastverhältnis LTS des Steuerblockes 1 ein Sprung.

Die Funktionsweise des Adaptionsblockes 16 wird im folgenden anhand von Figur 3 näher erläutert.
Ein Adaptionsschalter 40 schleift eines von drei anliegenden Signalen, Verbrauchssignal VS, Gangerkennungssignal GS oder Drehzahlsignal N durch.
Dieses liegt anschließend an Verstärkungskennlinien 41, 42, 43, 44 an, welche den jeweiligen P-, I- und D-Anteilen zugeordnet sind.
Die aus den Kennlinien 41 und 42 ausgelesenen Faktoren werden anschließend mit einem in Abhängigkeit der Regelabweichung RA aus Festwertspeichern 45 ausgelesenen Werten multipliziert. Diese halten für Klein- bzw. Großsignale verschiedene Verstärkungswerte VW 0, VW 1 und VW 2 bereit.
Für den aus der Verstärkungskennlinie 43 ausgelesenen Faktor steht ein fester Verstärkungswert VW zur Multiplikation bereit, welcher auch der aus der Kennlinie 44 ermittelten Filterzeitkonstanten T1 überlagert wird.

Ausgangsseitig liegen die aktuellen Werte für die Verstärkung des P-, I- bzw. D-Anteiles und T1 in Form von Signalen PS, IS, DS und T1 an, welche gemäß Figur 4 dem Pl-Regler 25 bzw. DT1-Regler 26 zugeführt werden.

Die Adaption der Regelparameter erfolgt somit in Abhängigkeit der Stellung des Adaptionsschalters 40, d. h. die aus den Verstärkungskennlinien 41, 42, 43, 44 ausgelesenen Faktoren hängen entweder vom Verbrauch, von der Drehzahl oder vom aktuell gewählten Gang ab.

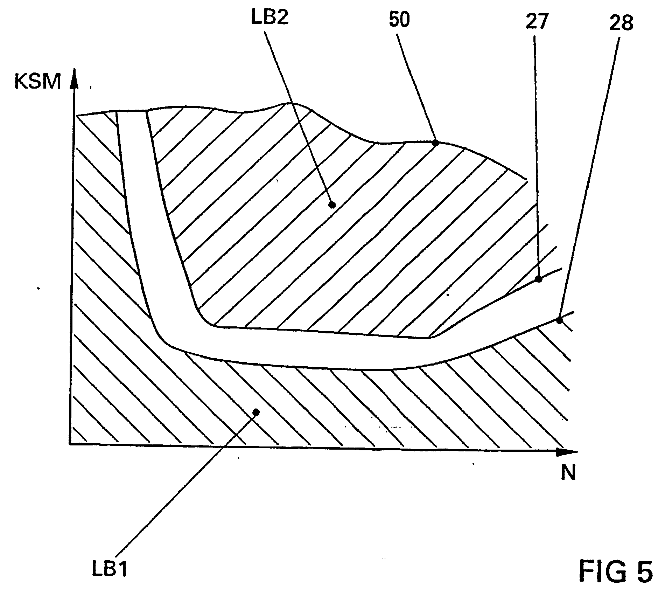

Die verschiedenen Lastbereiche, in denen die Brennkraftmaschine betrieben wird, sind in einem Drehzahl/Kraftstoffmengen-Diagramm in Figur 5 dargestellt. Erkennbar ist die Abhängigkeit des Kraftstoffeinspritzmengensignales KSM von der Drehzahl N anhand der eingezeichneten Vollastlinie 50. Desweiteren sind die anhand von Figur 4 erläuterten oberen und unteren Kennlinien 27 und 28 erkennbar, welche um die Hysterese 29 zueinander beabstandet liegen. In dem ersten Lastbereich LB1 unterhalb der unteren Kennlinie 28 ist die Regelung ausgeschaltet und das Stellglied des Turboladers ausschließlich gesteuert. Überschreitet das Kraftstoffmengensignal KSM die drehzahlabhängige obere Kennlinie 27 wird zusätzlich die Regelung eingeschaltet. Unterschreitet das Kraftstoffmengensignal KSM beim Sinken die untere Kennlinie 28 wird die Regelung ausgeschaltet.

## Patentansprüche

1. Verfahren zum Einstellen des Ladedruckes eines Turboladers einer Brennkraftmaschine mit zuschaltbarer Abgasrückführung, bei dem mit einem Stellglied ein dem Turbolader zugeordnetes Bypass-Ventil und/oder eine variable Geometrie in der Turbine des Turboladers betätigt wird, wobei die Ansteuerung des Stellgliedes in Abhängigkeit von zumindest der Drehzahl N der Brennkraftmaschine mit einer Steuereinrichtung angesteuert wird sowie in einem ersten Lastbereich LB1 der Ladedruck durch Auslesen von Sollwerten SW aus mindestens einem Soll-Kennfeld der Steuereinrichtung gesteuert und in einem zweiten Lastbereich LB2 der Ladedruck durch einen Regler der Steuereinrichtung geregelt wird, wobei in dem zweiten Lastbereich LB2 der Ladedruck durch den Regler der Steuereinrichtung unter Berücksichtigung einer Vorsteuerung durch die aus dem Soll-Kennfeld ausgelesen Soll-Werte SW geregelt wird, **dadurch gekennzeichnet, dass** in dem ersten Lastbereich LB1 die Abgasrückführung geregelt zugeschaltet ist und in dem zweiten Lastbereich LB2 abgeschaltet ist.

2. Verfahren nach Anspruch 1, **dadurch gekennzeichnet, dass** die Umschaltung zwischen dem gesteuerten ersten und dem geregelten zweiten Lastbereich LB1 und LB2 in Abhängigkeit eines drehzahlabhängigen Kraftstoffeinspritzmengensignales KSM erfolgt.

3. Verfahren nach Anspruch 1 oder 2, **dadurch gekennzeichnet, dass** im ersten Lastbereich LB1 die Sollwerte SW in Abhängigkeit der Drehzahl N und des Kraftstoffeinspritzmengensignales KSM aus den Soll-Kennfeldern ausgelesen werden.

4. Verfahren nach Anspruch 3, **dadurch gekennzeichnet, dass** die Soll-Werte SW aus verschiedenen Soll-Kennfeldern ausgelesen werden, wobei die Auswahl anhand eines Fahrweisesignales erfolgt.

5. Verfahren nach Anspruch 3 oder 4, **dadurch gekennzeichnet, dass** die Sollwerte SW desweiteren in Abhängigkeit von Korrekturwerten KW korrigiert werden, wobei diese aus Korrekturkennfeldern in Abhängigkeit von Atmosphärendruck- PD und/oder Umgebungslufttemperatursignalen LT ausgelesen werden.

6. Verfahren nach Anspruch 4, **dadurch gekennzeichnet, dass** der Regler als PID-Regler ausgebildet ist, bestehend aus einem Pl-Regler (25) und einem parallel geschalteten DT1-Regler, wobei dem PID-Regler die aus den Solt-Kennfeldern ermittelten Sollwerte SW als Ladedruck-Soll-Werte LDS und ein aus einem erfassten Ladedruck ermittelter Ladedruck-Ist-Wert LDI zugeführt werden.

7. Verfahren nach Anspruch 6, **dadurch gekennzeichnet, dass** einem Ausgang des Pl-Regelers die Sollwerte SW zur Vorsteuerung überlagert werden und diesem Signal anschließend ein Ausgang des DT1-Reglers überlagert wird.

8. Verfahren nach Anspruch 7 bei dem mit einem Stellglied eine variable Geometrie in der Turbine des Turboladers betätigt wird, **dadurch gekennzeichnet, dass** die Reglerparameter P, I und D aufgrund der sich bei der Betätigung der variablen Geometrie ändernden Regelstrecke einer gesteuerten Adaption unterzogen werden, wobei in Abhängigkeit zumindest der Drehzahl N ein Faktor aus mindestens einer Kennlinie ausgelesen und mit einem für den jeweiligen Reglerparameter P, I und D geltenden und von der Regelabweichung RA abhängigen Festwert zu einem adaptierten Reglerparameter PS, IS und DS multipliziert wird.

9. Verfahren nach Anspruch 8, **dadurch gekennzeichnet, dass** die Faktoren alternativ zur Drehzahl N in Abhängigkeit eines Kraftstoffverbrauchssignales VS oder anhand eines Gangerkennungssignales GS ausgelesen werden.

## Claims

1. Method for adjusting the boost pressure of a turbocharger for an internal combustion engine with switchable exhaust-gas feedback, in which a bypass valve which is associated with the turbocharger and/or a variable geometry in the turbine of the turbocharger are/is operated by means of an actuating element, with the actuating element being driven as a function of at least the rotation speed N of the internal combustion engine by means of a control device, and being controlled in a first boost pressure load range LB1 by reading nominal values SW from at least one nominal family of characteristics for the control device, and being regulated in a second boost pressure load range LB2 by a regulator for the control device, with the regulation process being carried out in the second boost pressure load range LB2 by the regulator for the control device taking account of pilot control by means of the nominal values SW read from the nominal family of characteristics, **characterized in that** the exhaust-gas feedback is switched to be regulated in the first load range LB1, and is switched off in the second load range LB2.

2. Method according to Claim 1, **characterized in that** the changeover between the controlled first load range LB1 and the regulated second load range LB2 is carried out as a function of a fuel injection flow rate signal KSM which is dependent on the rotation speed.

3. Method according to Claim 1 or 2, **characterized in that**, in the first load range LB1, the nominal values SW are read from the nominal families of characteristics as a function of the rotation speed N and of the fuel injection flow rate signal KSM.

4. Method according to Claim 3, **characterized in that** the nominal values SW are read from different nominal families of characteristics, with the selection being based on a type of driving signal.

5. Method according to Claim 3 or 4, **characterized in that** the nominal values SW are furthermore corrected as a function of correction values KW, with these correction values KW being read from correction families of characteristics as a function of atmospheric pressure signals PD and/or ambient air temperature signals LT.

6. Method according to Claim 4, **characterized in that** the regulator is in the form of a PID regulator, comprising a PI regulator (25) and a parallel-connected DT1 regulator, with the PID regulator being supplied with the nominal values SW determined from the nominal families of characteristics as boost pressure nominal values LDS, and being supplied with a boost pressure actual value LDI which is determined from the detected boost pressure.

7. Method according to Claim 6, **characterized in that** the nominal values SW are superimposed on an output of the PI regulator for pilot control, and an output of the DT1 regulator is then superimposed on this signal.

8. Method according to Claim 7 in which a variable geometry in the turbine of the turbocharger is operated by an actuating element, **characterized in that** the regulator parameters P, I and D are subjected to controlled adaptation on the basis of the control path, which varies during operation of the variable geometry, with a factor being read from at least one characteristic as a function of at least the rotation speed N, and being multiplied by a fixed value, which is applicable to the respective regulator parameter P, I and D and is dependent on the control error RA, to form an adapted regulator parameter PS, IS and DS.

9. Method according to Claim 8, **characterized in that**, as an alternative to the rotation speed N, the factors are read as a function of a fuel consumption signal VS or on the basis of a gear identification signal GS.

## Revendications

1. Procédé de réglage de la pression de suralimentation d'un moteur à combustion interne avec un recyclage des gaz d'échappement pouvant être mis en service, dans lequel une vanne en dérivation associée au turbocompresseur et/ou une géométrie variable dans la turbine du turbocompresseur est(sont) actionnée(s) par un organe de commande, procédé dans lequel l'activation de l'organe de commande est effectuée par un dispositif de commande en fonction d'au moins le régime N du moteur à combustion interne et la pression de suralimentation est réglée dans une première zone de charges LB1 par sélection de valeurs de consigne SW à partir d'au moins un champ caractéristique de consigne et la pression de suralimentation est régulée dans une deuxième zone de charges LB2 par un régulateur du dispositif de commande, la pression de suralimentation dans la seconde zone de charges LB2 étant réglée par un régulateur du dispositif de commande compte tenu d'un préréglage par les valeurs de consigne SW sélectionnées à partir du champ caractéristique de consigne, **caractérisé en ce que** le recyclage des gaz d'échappement est mis en service de façon réglée dans la première zone de charges LB1 et est mis hors service dans la deuxième zone de charges LB2.

2. Procédé selon la revendication 1, **caractérisé en ce que** la commutation entre la première zone de charges réglée LB1 et la deuxième zone de charges régulée LB2 s'effectue en fonction d'un signal de quantité de carburant injectée KSM dépendant du régime.

3. Procédé selon la revendication 1 ou 2, **caractérisé en ce que** dans la première zone de charges LB1 les valeurs de consigne SW sont sélectionnées à partir des champs caractéristiques de consigne en fonction du régime N et du signal KSM de quantité de carburant injectée.

4. Procédé selon la revendication 3, **caractérisé en ce que** les valeurs de consigne SW sont sélectionnées à partir de différents champs de consigne, la sélection étant effectuée au moyen d'un signal de style de conduite.

5. Procédé selon la revendication 3 ou 4, **caractérisé en ce que** les valeurs de consigne SW sont en outre corrigées en fonction de valeurs de correction KW, celles-ci étant sélectionnées à partir de champs caractéristiques de correction en fonction de signaux de pression atmosphérique PD et/ou de signaux de température d'air ambiant LT.

6. Procédé selon la revendication 4, **caractérisé en ce que** le régulateur est conçu comme un régulateur PID, constitué d'un régulateur PI (25) et d'un régulateur DT1 connecté en parallèle, les valeurs de consigne (SW) déterminées à partir des champs caractéristiques de consigne étant introduites dans le régulateur PID en tant que valeurs de consigne de pression de suralimentation LDS et une valeur réelle de pression de suralimentation LD1 déterminée à partir d'une pression de suralimentation captée est introduite dans le régulateur PID.

7. Procédé selon la revendication 6, **caractérisé en ce que** les valeurs de consigne SW sont superposées à une sortie du régulateur PI aux fins de préréglage et une sortie du régulateur DT1 est ensuite superposée à ce signal.

8. Procédé selon la revendication 7 dans lequel une géométrie variable est actionnée dans la turbine du turbocompresseur au moyen d'un organe de commande, **caractérisé en ce que** les paramètres de régulateur P, I et D sont soumis à une adaptation commandée en raison du système commandé se modifiant lors de l'actionnement de la géométrie variable, un facteur étant sélectionné à partir d'au moins une courbe caractéristique en fonction d'au moins le régime N et étant multiplié avec une valeur fixe valable pour chacun des paramètres de régulateur P, I et D et dépendant de l'écart de régulation RA, pour donner un paramètre adapté de régulateur PS, IS et DS.

9. Procédé selon la revendication 8, **caractérisé en ce que** les facteurs sont sélectionnés en variante par rapport au régime N en fonction d'un signal VS de consommation de carburant ou au moyen d'un signal GS de reconnaissance de vitesse.
